# EUROPÄISCHE PATENTANMELDUNG

(11) **EP 1 988 363 A2**
(43) Veröffentlichungstag der Anmeldung: **05.11.2008**
(21) Anmeldenummer: 08008096.3
(22) Anmeldetag: 28.04.2008
(51) Int. Cl.: G01C 21/36, G06T 11/60, G09B 29/00, G09B 29/10

(54) **Vorrichtung und Verfahren zur Erstellung eines Textobjekts**

(30) Priorität: 03.05.2007 DE 102007021128; 21.02.2008 DE 102008010419
(71) Anmelder: Navigon AG, 20251 Hamburg (DE)
(72) Erfinder: Michael, Oliver, 97288 Theilheim (DE)
(74) Vertreter: von den Steinen, Axel

(57) **Zusammenfassung**

Die Erfindung betrifft eine grafische Ausgabevorrichtung zur Erzeugung einer gemischt grafisch-textuellen Darstellung mit zumindest einem aus einer Mehrzahl von Buchstaben bestehenden Textobjekt für die Kennzeichnung eines geographischen Merkmals, die Ausgabevorrichtung umfassend eine Prozessoreinrichtung, die zur Umformung des Textobjekts eingerichtet ist, dergestalt, dass das umgeformte Textobjekt neben einem normalen Textbereich mit Buchstaben in Ursprungsgröße einen komprimierten Textbereich mit relativ zur Ursprungsgröße verkleinerten bzw. komprimierten Buchstaben umfasst, wobei die Grenze zwischen dem normalen Textbereich und dem komprimierten Textbereich an einer semantischen Sprungstelle des Textobjekts verläuft.

Ferner betrifft die Erfindung ein Verfahren zur Erstellung eines aus einer Mehrzahl von Buchstaben bestehenden Textobjekts mittels einer Prozessoreinrichtung, zum Zweck der Darstellung des Textobjekts mittels einer grafischen Ausgabevorrichtung.

## Beschreibung

Die Erfindung betrifft eine Ausgabevorrichtung zur Erzeugung einer grafisch-textuellen Darstellung mit zumindest einem aus einer Mehrzahl von Buchstaben bestehenden Textobjekt insbesondere zur Kennzeichnung eines geographischen Merkmals, gemäß dem Oberbegriff des Patentanspruchs 1, sowie ein Verfahren zur Erstellung eines Textobjekts gemäß Patentanspruch 11.

Vorrichtungen bzw. Verfahren zur Ausgabe bzw. Anzeige beispielsweise geographischer oder kartographischer Darstellungen - wobei die Darstellungen Textobjekte umfassen - kommen häufig beispielsweise bei Navigationssystemen zum Einsatz. Im Anwendungsfall bei Navigationssystemen ist es im Allgemeinen notwendig, geographische Informationen und Darstellungen, beispielsweise Kartendarstellungen, so aufzubereiten, dass sich diese auf einer zum Navigationssystem gehörenden Anzeigeeinrichtung, insbesondere auf einem Navigationsbildschirm, darstellen lassen.

Zusätzlich oder alternativ zur Anzeige von geographischen Darstellungen bzw. Kartendarstellungen ist es bei Navigationssystemen zumeist notwendig, auf dem Bildschirm auch Textobjekte zur Anzeige zu bringen.

Derartige Textdarstellungen dienen dabei im allgemeinen der textlichen Bezeichnung bestimmter auf der Anzeigeeinrichtung des Navigationssystems dargestellter geographischer Merkmale, der Bezeichnung von Kartenmerkmalen wie beispielsweise von Städten, Straßen, Sehenswürdigkeiten, Landschaftsmerkmalen usw., oder auch der Auswahl textlich dargestellter Listenelemente aus einem Auswahlmenü bzw. aus einer Liste, beispielsweise zum Zweck der Zieleingabe.

Gebräuchliche Navigationssysteme besitzen jedoch zumeist vergleichsweise kleine Anzeigeeinrichtungen oder Bildschirme, auf denen häufig eine Vielzahl von grafischen Informationen wie auch zusätzlich Textinformationen dargestellt werden müssen. So werden zur besseren Orientierung des Benutzers eines Navigationssystems beispielsweise Straßen, Städte und andere geographische oder Landschaftsmerkmale im Allgemeinen mit einer textlichen Bezeichnung versehen, welche - alternativ oder zusätzlich zu der grafischen Darstellung der entsprechenden Merkmale selbst - auf der zur Verfügung stehenden Fläche des Bildschirms untergebracht werden muss.

Dabei tritt im Stand der Technik häufig das Problem auf, dass der auf dem Bildschirm der Navigationseinrichtung verfügbare Platz bzw. Textdarstellungsbereich oftmals nicht ausreicht, um die zur Information des Benutzers vorgesehenen oder notwendigen Textinformationen in der gewünschten Ausführlichkeit und zudem in einer lesbaren Größe auf den Bildschirm zu bringen.

Dies bedeutet, dass im Stand der Technik als häufiger Kompromiss nur ein Teil der eigentlich erforderlichen oder wünschenswerten Textinformationen tatsächlich auf den Bildschirm gebracht werden kann. Alternativ werden bei aus dem Stand der Technik bekannten Navigationseinrichtungen Textinformationen entweder nur abgekürzt dargestellt, was die Lesbarkeit und intuitive Erfassbarkeit der Informationen verschlechtert, oder aber es wird eine sehr kleine Textgröße gewählt, was ebenfalls zu einer ungenügenden Erkennbarkeit führen kann. Gegebenenfalls kann dies sogar zu einem Sicherheitsproblem im Straßenverkehr werden, falls nämlich der Benutzer eines Navigationssystems einen zu großen Teil seiner Konzentration darauf verwenden muss, unleserliche oder schwer erkennbare Texte wie beispielsweise Straßenbezeichnungen vom Bildschirm des Navigationssystems abzulesen.

Aus der unveröffentlichten deutschen Patentanmeldung DE 10 2006 052 663.5, auf die hiermit Bezug genommen und die in ihrem gesamten Umfang in die Offenbarung der vorliegenden Erfindung einbezogen wird, ist eine Vorrichtung und ein Verfahren zur Erstellung eines Textobjekts bekannt, der bzw. dem eine ähnliche Problematik zugrunde liegt. Bei dieser Patentanmeldung wird zur Lösung der geschilderten Problematik vorgeschlagen, einen Teil des darzustellenden Textobjekts verkleinert bzw. komprimiert darzustellen, so dass ein größerer Teil des Textobjekts bzw. das gesamte darzustellende Textobjekt in den auf der Anzeigevorrichtung zur Verfügung stehenden Platz eingepasst werden kann.

Dieses bekannte Verfahren nimmt bei der Modifikation und Darstellung des Textobjekts jedoch keine Rücksicht auf den möglicherweise unterschiedlich großen Bedeutungsgehalt der verschiedenen Bestandteile eines Textobjekts. Daher kann es bei diesem bekannten Verfahren vorkommen, dass Teile des Textobjekts stark komprimiert oder verkleinert dargestellt werden, die einen wesentlichen Bedeutungsgehalt des Textobjekts ausmachen, während andere Teile des Textobjekts, die möglicherweise nur wenig zum Bedeutungsgehalt des Textobjekts beitragen, in Originalgröße dargestellt werden.

Mit diesem Hintergrund ist es die Aufgabe der vorliegenden Erfindung, eine Vorrichtung bzw. ein Verfahren zur Erstellung eines Textobjekts zu schaffen, mit der bzw. mit dem sich die genannten, im Stand der Technik vorzufindenden Nachteile überwinden lassen. Insbesondere sollen dabei auch längere Textobjekte auf kleinen Ausgabevorrichtungen, wie beispielsweise Navigationsbildschirmen, angezeigt werden können, ohne dass hierzu anderweitig benötigter Platz auf dem Bildschirm in Anspruch genommen wird. Gleichzeitig soll dabei jedoch vermieden werden, dass zur schnellen und intuitiven Erfassung des Textobjekts durch den Nutzer erforderliche wichtige Bestandteile des Textobjekts mehr als notwendig verkleinert oder komprimiert dargestellt werden. Es soll somit eine Möglichkeit gefunden werden, Bestandteile von Textobjekten, die für den Nutzer nur wenig relevante Informationen enthalten, automatisch und regelbasiert zu identifizieren und entsprechend verkleinert darstellen zu können. Bei Straßennamen wären Begriffe wie "Straße", "-allee" oder "Autobahnkreuz" Beispiele für solche Namensbestandteile, die für den Nutzer nur wenig relevante Information enthalten und daher verkleinert dargestellt werden könnten.

Diese Aufgabe wird durch eine Vorrichtung gemäß Patentanspruch 1, bzw. durch ein Verfahren mit den Merkmalen des Patentanspruchs 11 gelöst.

Bevorzugte Ausführungsformen sind jeweils Gegenstand der Unteransprüche.

Die erfindungsgemäße Ausgabevorrichtung dient dabei der Erzeugung einer grafisch-textuellen Darstellung, wobei die Darstellung zumindest ein aus einer Mehrzahl von Buchstaben bestehendes Textobjekt umfasst, das beispielsweise der Kennzeichnung eines geographischen Merkmals dient. Die Ausgabevorrichtung umfasst hierzu eine Prozessoreinrichtung, wobei die Prozessoreinrichtung zur Umformung des darzustellenden Textobjekts eingerichtet ist, dergestalt, dass das umgeformte Textobjekt neben einem normalen Textbereich, bei dem die Buchstaben eine Ursprungsgröße aufweisen, ferner einen komprimierten Textbereich umfasst. In dem komprimierten Textbereich sind die Buchstaben relativ zur Ursprungsgröße verkleinert bzw. komprimiert.

Erfindungsgemäß zeichnet sich die Ausgabevorrichtung jedoch dadurch aus, dass die Grenze zwischen dem normalen Textbereich und dem komprimierten Textbereich an einer semantischen Sprungstelle des Textobjekts verläuft.

Auf diese Weise lässt sich sicherstellen, dass nur solche Textbereiche des darzustellenden Textobjekts verkleinert dargestellt werden, die eine semantisch abweichende, insbesondere eine geringere semantische Relevanz als der sonstige Textbereich des Textobjekts aufweisen. Dabei ist jedoch zudem gewährleistet, dass Bereichsgrenzen zwischen normalem und komprimiertem. Textbereich an semantisch relevanten Stellen im Textobjekt verlaufen und somit den Text- und Lesefluss sowie die Konzentration des Betrachters nicht unterbrechen. Die Verkleinerung bzw. Komprimierung der Buchstaben des komprimierten Textbereichs kann dabei alternativ bzw. zusätzlich eine Verkleinerung bzw. Komprimierung der Abstände dieser Buchstaben umfassen.

Gemäß einer bevorzugten Ausführungsform der Erfindung ist die Ausgabevorrichtung so eingerichtet, dass innerhalb eines Textobjekts Buchstaben bzw. Buchstabenabstände mit mehr als zwei unterschiedlichen Größenabmessungen dargestellt werden können. Dies ermöglicht eine nicht lediglich zweistufige Differenzierung, sondern auch eine feinere Abstufung infolge unterschiedlicher semantischer Relevanzen verschiedener Textbereiche des Textobjekts. Dementsprechend kann eine mehrfach abgestufte Komprimierung von Textbereichen mit entsprechend abgestuft reduzierter semantischer Relevanz erfolgen.

Gemäß einer weiteren bevorzugten Ausführungsform der Erfindung ist die Ausgabevorrichtung so eingerichtet, dass die Größenabmessungen der Buchstaben eines umgeformten Textobjekts innerhalb eines Umfelds von definierter Größe um die Sprungstelle stetig und/oder kontinuierlich zwischen der Ursprungsgröße der Buchstaben des normalen Textbereichs und der Größenabmessung der Buchstaben des komprimierten Textbereichs verändert werden. Hierdurch lassen sich noch weichere Übergänge zwischen den normalen Textbereichen (mit Buchstaben in Ursprungsgröße) und den komprimierten Textbereichen (mit Buchstaben reduzierter Größe) erzielen, wodurch der Lesefluss des Betrachters noch weniger Unterbrechung erfährt.

Eine weitere bevorzugte Ausführungsform der Erfindung sieht vor, dass die Ausgabevorrichtung eine Speichereinrichtung mit einer Zusammenstellung von semantischen, morphologischen und/oder linguistischen Sprachregeln enthält.

Aufgrund der bei dieser Ausführungsform in der Speichereinrichtung enthaltenen Sprachregeln kann insbesondere die automatische Identifikation geeigneter Sprungstellen im Textobjekt erfolgen, an denen der Übergang vom normalen Textbereich zum komprimierten Textbereich erfolgen soll. Es wird Speicherplatz eingespart, da nicht für jedes mögliche - beispielsweise in einem Navigationssystem gespeicherte - Tcxtobjekt eigens die geeigneten Sprungstellen und Relevanzgrade der Textbestandteile mitgespeichert werden müssen. Zudem können vorhandene Datensätze bzw. Textdatenbanken unverändert weitergenutzt werden; ferner können außer Straßennamen auch praktisch beliebige andere darzustellende Textdaten, z.B. POI's usw., verarbeitet und entsprechend teilkomprimiert dargestellt werden. Aufgrund der morphologischen Analyse des Textobjekts kann dabei insbesondere eine automatische Identifikation und Extraktion typischer Silben erfolgen, die innerhalb von Worten üblicherweise von geringerer Bedeutung sind. Bei geeignetem Umfang des gespeicherten Regelsatzes können zudem auch Textdaten aus verschiedenen Sprachen verarbeitet und entsprechend komprimiert dargestellt werden.

Gemäß einer weiteren bevorzugten Ausführungsform der Erfindung ist vorgesehen, dass die Ausgabevorrichtung in einer Speichereinrichtung Listen von Textbestandteilen mit feststehender, insbesondere mit niedriger semantischer Relevanz enthält.

Mittels Abgleich der darzustellenden Textbestandteile mit den gespeicherten Listen kann somit eine automatische Identifikation von Sprungstellen bzw. komprimiert darzustellenden Textbestandteilen des Textobjekts erfolgen. In den gespeicherten Listen können insbesondere Artikel, Präpositionen, Abkürzungen, Wortbestandteile und Suffixe bzw. Präfixe enthalten sein, die typischerweise eine im Vergleich zu sonstigen Textbestandteilen von Textobjekten reduzierte semantische Relevanz aufweisen und somit ohne wesentlichen Informationsverlust verkleinert dargestellt werden können. Auch bei dieser Ausführungsform können vorhandene Datensätze bzw. Navigationsdatenbanken unverändert weitergenutzt werden, und es kann eine Anwendung der semantischen Textkomprimierung auf einfache Weise bei unterschiedlichen Sprachen erfolgen, falls die gespeicherten Listen von Textbestandteilen mit niedriger semantischer Relevanz sich auf die entsprechenden Sprachen erstrecken.

Gemäß einer weiteren Ausführungsform der Erfindung ist für jeden normalen, in Ursprungsgröße darzustellenden Textbereich sowie für jeden zu komprimierenden Textbereich des darzustellenden Textobjekts eine Relevanznotation bereits gespeichert. Bei dieser Ausführungsform kann eine einfache Umformung des Textobjekts direkt anhand der gespeicherten Relevanznotation erfolgen. Dabei kann die gespeicherte Relevanznotation beispielsweise durch eine vor dem eigentlichen Rendering des Textobjekts erfolgte Analyse ermittelt worden sein. Die Analyse des Textobjekts und Speicherung der entsprechenden Relevanznotation seiner Bestandteile kann dabei entweder auf der Prozessoreinrichtung der Ausgabevorrichtung erfolgen, oder aber bereits im Vorfeld bei der Erstellung der Datenbank auf einem separaten Datcnvcrarbeitungssystem des Nutzers oder des Anbieters vorgenommen worden sein.

Bei dieser Ausführungsform ergibt sich eine besonders hohe Schnelligkeit des Anzeige-Renderings, und es werden reduzierte Anforderungen bezüglich der Rechenleistung zur Laufzeit des Renderings der Buchstaben des Textobjekts an die Ausgabevorrichtung gestellt. Hierdurch eignet sich diese Ausführungsform insbesondere für Ausgabevorrichtungcn mit vergleichsweise geringer eigener Rechenleistung.

Mit diesem Hintergrund ist es gemäß einer weiteren bevorzugten Ausführungsform vorgesehen, dass lediglich für zu komprimierende Textbereiche eine Relevanznotation gespeichert ist, nicht jedoch für solche Textbereiche, die unkomprimiert und in Ursprungsgröße darzustellen sind. Hierdurch wird Speicherplatz eingespart, da für normale, nicht zu komprimierende Textbereiche mit hoher semantischer Relevanz kein zusätzlicher Speicherplatz zur Speicherung der Relevanznotation erforderlich ist.

Die Erfindung lässt sich unabhängig davon verwirklichen, wie die Umformung der zu komprimierenden Bereiche des Textobjekts grafisch bzw. geometrisch erfolgt, solange durch die Komprimierung der Platzbedarf des Textobj ekts reduziert wird.

Gemäß einer besonders bevorzugten Ausführungsform der Erfindung werden bei der Komprimierung die Größenabmessungen der Buchstaben des zu komprimierenden Textbereichs jedoch lediglich in einer Dimension, vorzugsweise in Längsrichtung des Textobjekts, verändert.

Auf diese Weise wird das Textobjekt ebenso effektiv verkürzt wie bei einer proportionalen Komprimierung bzw. Verkleinerung der Buchstaben entlang beider Buchstabendimensionen, also entlang sowohl der Höhe als auch der Breite der Buchstaben, ohne dass die Buchstaben jedoch allzu klein werden. Denn bei dieser Ausführungsform erfolgt bei gleicher effektiver Verkürzung eine lediglich lineare, nicht jedoch eine quadratische Verkleinerung der von den verkleinerten Buchstaben eingenommenen Fläche. Ebenso wird dank dieser Ausführungsform die pro Buchstabe zur Darstellung auf der Ausgabevorrichtung, also insbesondere auf einem Bildschirm, verwendete Anzahl der Pixel lediglich linear und nicht quadratisch bezüglich der reduzierten Länge des Textobjekts verkleinert. Hierdurch wird trotz der Komprimierung des Textobjekts noch eine gute Auflösung und damit Lesbarkeit der Buchstaben erreicht. Dies ist von Bedeutung insbesondere im Hinblick auf LCD-Bildschirme, die zumeist in der horizontalen Richtung eine dreifach höhere Auflösung als in der vertikalen Richtung aufweisen, sobald bei der Erzeugung der Buchstaben Antialiasing berücksichtigt wird bzw. ein geeignetes Subpixel-Rendering erfolgt.

Gemäß einer weiteren bevorzugten Ausführungsform der Erfindung ist die Ausgabevorrichtung zur automatischen Ermittlung der maximalen Ursprungsgröße der Buchstaben des normalen Textbereichs eingerichtet. Dabei wird die maximale Ursprungsgröße in Abhängigkeit des zur Anzeige des Textobjekts maximal zur Verfügung stehenden Platzes ermittelt. Auf diese Weise ergibt sich eine weitere Optimierung der Lesbarkeit, indem das teilkomprimierte Textobjekt insgesamt mit der maximal möglichen Textgröße innerhalb des zur Verfügung stehenden Platzes dargestellt werden kann. Hierdurch wird somit vermieden, dass teilkomprimierte Textobjekte auch nach der Komprimierung noch zu lang für den zur Verfügung stehenden Platz sind, ebenso wie sich vermeiden lässt, dass teilkomprimierte Textobjekte nicht die gesamte zur Darstellung verfügbare Länge erreichen.

Die Erfindung lässt sich prinzipiell überall anwenden, wo eine Ausgabe von textlichen Informationen erfolgen soll und wo hierzu lediglich begrenzter Platz zur Verfügung steht. Mit diesem Hintergrund ist gemäß weiterer Ausführungsformen der Erfindung vorgesehen, dass die Ausgabevorrichtung ein transportables Navigationsgerät, ein Terminal für einen Online-Navigationsdienst, eine Flottensoftware für den stationären oder für den mobilen Einsatz oder eine Desktop-Publishing-Einrichtung ist. Allgemein lässt sich die Erfindung auch zur Anzeige von Texten auf kompakten tragbaren Geräten wie PDAs oder Mobiltelefonen einsetzen. In allen diesen Fällen lässt sich die Erfindung insbesondere dann mit Vorteil zur Anwendung bringen, wenn ein möglichst großer textlicher Informationsgehalt auf einer begrenzten Fläche darzustellen ist.

Die Erfindung betrifft ferner ein Verfahren zur Herstellung eines aus einer Mehrzahl von Buchstaben bestehenden Textobjekts zum Zweck der Darstellung des Textobjekts mittels einer graphischen Ausgabevorrichtung. Dabei kommt eine Prozessoreinrichtung zum Einsatz, und das Textobjekt umfasst einen normalen Textbereich mit Buchstaben in Ursprungsgröße sowie einen zu komprimierenden Textbereich mit relativ zur Ursprungsgröße verkleinerten bzw. komprimierten Buchstaben.

Das erfindungsgemäße Verfahren weist die nachfolgenden Verfahrensschritte auf:

Zunächst erfolgt in einem ersten Verfahrenschritt a) eine Analyse des darzustellenden Textobjekts anhand gespeicherter semantischer, morphologischer bzw. linguistischer Regeln und/oder anhand zusätzlich zum Textobjekt in einer Datenbank gespeicherter Zusatzinformationen. Anschließend erfolgt in einem weiteren Verfahrensschritt b) anhand der gespeicherten Regeln bzw. Zusatzinformationen eine morphologische Aufteilung des darzustellenden Textobjekts in verschiedene Textbereiche bzw. Morpheme. Danach erfolgt in einem weiteren Verfahrensschritt c) eine Ermittlung der semantischen Relevanz der zuvor festgestellten Textbereiche bzw. Morpheme, wonach in einem weiteren Verfahrenschritt d) das Ergebnis der Relevanzanalyse für jeden Textbereich mit reduzierter semantischer Relevanz gespeichert wird.

Nachfolgend erfolgt in einem weiteren Verfahrenschritt e) auf Basis der Relevanzanalyseergebnisse das Rendern der Buchstaben des Textobjekts. Dabei werden die Buchstaben von Textbereiche mit normaler bzw. hoher semantischer Relevanz in Ursprungsgröße gerendert, während die Buchstaben von Textbereichen mit reduzierter semantischer Relevanz mit verkleinerten Größenabmessungen gerendert werden. Schließlich erfolgt in einem weiteren Verfahrenschritt f) die Ausgabe des gerenderten Textobjekts auf der grafischen Ausgabeeinrichtung.

Dies bedeutet, dass erfindungsgemäß nur diejenigen Textbereiche des Textobjekts verkleinert gerendert und dementsprechend verkleinert dargestellt werden, denen innerhalb des Textobjekts eine reduzierte semantischer Bedeutung zukommt. Dabei wird gleichzeitig gewährleistet, dass Bereichsgrenzen zwischen normalen und komprimierten Textbereichen nicht beliebig platziert werden (was die Lesbarkeit erschweren könnte), sondern vielmehr an semantisch relevanten Stellen im Textobjekt angeordnet sind. Auf diese Weise ergibt sich ein optimaler Textfluss und eine gute Lesbarkeit sowie Erfassung des Informationsgehalts des Textobjekts trotz der teilwcisen Komprimierung des Textobjekts.

Gemäß einer besonders bevorzugten Ausführungsform der Erfindung umfassen die Zusatzinformationen im Verfahrenschritt a) aktuelles Land, Sprache, Objekttyp, Ortstyp bzw. Ortsgröße, Straßentyp und Straßenbedeutung und/oder Textposition des Objekttyps, Ortstyps bzw. Straßentyps in der Objektbezeichnung.

Auf diese Weise kann dank der gespeicherten Zusatzinformationen eine zielsichere automatische Identifikation und Separierung von Textbestandteilen mit individualisierendem Charakter von Textbestandteilen mit kategorisierendem Charakter erfolgen. Textbestandteile mit individualisierendem Charakter sind im geographischen Bereich beispielsweise der Basisname einer Straße, einer Stadt, eines Points of Interest oder eines anderen geographischen Objekts, während Textbestandteile mit kategorisierendem Charakter beispielsweise durch den Typ der Straße oder des geographischen Objekts gebildet sind. Sind somit zusätzlich zu den darzustellenden Textobjekten jeweils derartige Zusatzinformationen über deren einzelne Bestandteile gespeichert, so kann auf einfache Weise ermittelt werden, welche Bereiche eines darzustellenden Textobjekts eine hohe semantische Relevanz aufweisen und damit in Ursprungsgröße darzustellen sind (beispielsweise der Basisname einer Straße), und welche Bereiche des Textobjekts lediglich eine reduzierte semantischer Relevanz aufweisen, und damit komprimiert ausgegeben werden können (beispielsweise der Straßentyp oder ein Suffix wie -straße, -weg, -allee usw.).

Dabei ist auch der Zusammenhang zwischen dem Objekttyp und den Textbestandteilen der darzustellenden Objektbezeichnung von Bedeutung und wird dementsprechend vorzugsweise berücksichtigt. Denn in Abhängigkeit davon, welcher Objekttyp vorliegt, kann sich eine unterschiedliche Relevanz für die einzelnen Textbestandteile des Textobjekts ergeben. So kann beispielsweise das Suffix "-straße" in einem Straßennamen als weniger relevant eingestuft werden, da es lediglich den kategorisiercnden Straßentyp, nicht aber den individualisierenden Straßennamen angibt. Hingegen kann dieselbe Information "-straße" beispielsweise in einem Ortsnamen wie "Neustadt an der Weinstraße" unter Umständen als relevant eingestuft werden. Ähnliches gilt auch für Points of Interest, wo z.B. die Objektbezeichnung "Karstadt" als Name für einen Point of Interest insgesamt eine hohe Relevanz aufweisen kann, während das Suffix "-stadt" in einem Städtenamen als weniger relevant eingestuft werden kann.

Gemäß einer besonders bevorzugten Ausführungsform des erfindungsgemäßen Verfahrens ist dabei vorgesehen, dass die Zusatzinformationen im Verfahrenschritt a) Listen aus Textbestandteilen mit reduzierter semantischer Relevanz, wie insbesondere Präfixe, Infixe, Suffixe, Vorsilben und Endsilben, sprachspezifische Artikel und Präpositionen, Abkürzungen und Gesellschaftsformen, Listen aus Trennzeichen und/oder Regeln zu Kompositabildung und Silbentrennung umfassen. Dank dieser Ausführungsform kann eine automatische und zuverlässige Identifikation von Textbestandteilen mit reduzierter semantischer Relevanz auch bei variablen bzw. unbegrenzten Umfängen an darzustellenden Textobjekten erfolgen. Auf diese Weise lässt sich das erfindungsgemäße Verfahren auch ohne vorherige Datenaufbereitung zu jedem einzelnen Textobjckt auf praktisch beliebige Textdatensätze anwenden, sobald der entsprechende Umfang an Zusatzinformationen einmalig bereitgestellt ist. Bezüglich der Umformung von Gesellschaftsformen, die zumeist landesspezifische Abkürzungen darstellen, liegt ein besonderer Vorteil darin, dass diese in vielen Fällen in Großbuchstaben vorliegen und damit bei unveränderter Darstellung häufig besonders viel Platz auf der Anzeige in Anspruch nehmen würden.

Eine bevorzugte Ausführungsform des erfindungsgemäßen Verfahrens sieht vor, dass im Verfahrenschritt e) Buchstaben, die sich innerhalb eines definierten Umfelds der Sprungstelle zwischen normalem Textbereich und komprimiertem Textbereich befinden, mit stetig und/oder kontinuierlich variablen Größenabmessungen zwischen der Größenabmessung der Buchstaben des normalen Textbereichs und der Größenabmessung der Buchstaben des komprimierten Textbereichs gerendert werden. Auf diese Weise ergibt sich eine optimierte Anpassung an den Lesefluss, indem zwischen normalem Textbereich und komprimiertem Textbereich ein weicherer Übergang geschaffen wird.

Gemäß einer weiteren bevorzugten Ausführungsform der Erfindung ist vorgesehen, dass beim Vorliegen eines Trennzeichens an einer Sprungstelle zwischen einem normalen und einem komprimierten Textbereich eines Textobjekts im Verfahrenschritt e) eine nicht stetige, sprunghafte Änderung der Buchstabcngröße bzw. des Grades der Kompression der Buchstaben festgelegt wird. Diese Ausführungsform hat den Hintergrund, dass im Bereich von Trennzeichen eines Textobj ekts ohnehin ein gewünschter Bruch in der Textdarstellung vorhanden ist. An einer solchen Stelle kann und soll somit auf einen fließenden Übergang in der Buchstabengröße bzw. im Grad der Kompression der Buchstaben verzichtet werden. Hierdurch lässt sich zudem aufgrund der sprunghaften Größenänderung zusätzlich Platz einsparen gegenüber der kontinuierlichen Grö-ßenänderung der Buchstaben an einer semantischen Sprungstelle. Geeignete Trennzeichen hierfür sind zum Beispiel das Leerzeichen, der Bindestrich, der Punkt oder der Apostroph, wobei der Umfang an zu berücksichtigenden Leerzeichen in Anhängigkeit des aktuellen Landes bzw. der Ausgabesprache oder in Abhängigkeit spezifischer zu bearbeitender Datenbestände variieren kann.

Eine weitere Ausführungsform des erfindungsgemäßen Verfahrens sieht vor, dass die Ermittlung und Speicherung der Relevanzanalyseergebnisse in den Verfahrensschritten c) und d) in Form einer Zuordnung eines mehr als zweistufigen Relevanzwerts zum jeweiligen Textbereich erfolgt. Auf diese Weise kann eine nicht nur zweistufige, sondern mehrstufige Differenzierung der Relevanz der Textbereiche und damit ein dementsprechend mehrstufig variabler Komprimierungsgrad für die entsprechenden Textbereiche mit reduzierter Relevanz durchgeführt werden. Dies bcdcutet insbesondere, dass Textbereiche mit besonders niedriger semantischer Relevanz auch besonders klein dargestellt werden können, während gleichzeitig Textbereiche mit beispielsweise mittelhoher semantischer Relevanz weniger stark komprimiert dargestellt werden können.

Vorzugsweise werden die Ergebnisse der Relevanzanalyse im Verfahrensschritt d) unter einer Datenkompression mittels einer Lauflängenkodierung gespeichert, indem bei einem Textobjekt jeweils nur der Beginn und die Länge eines Textbereichs mit konstanter semantischer Relevanz gespeichert wird, anstatt für jeden Buchstaben des Textobjekts einen eigenen Relevanzwerts zu speichern. Auf diese Weise kann eine verlustlose und dennoch stark komprimierte Speicherung der Ergebnisse der Relevanzanalyse unter erheblicher Einsparung von Speicherplatz erfolgen.

Die Notation der Ergebnisse der Relevanzanalyse relativ zu den einzelnen Buchstaben des darzustellenden Textobjekts ermöglicht dabei im einfachsten Fall, dass der Relevanzwert binär gespeichert wird (relevant Ja/Nein). Wahlweise können jedoch auch mehrstufige Zwischenwerte bezüglich der Relevanz ermittelt und gespeichert werden, wobei bei der späteren Ausgabe des Textobjekts die darzustellende Buchstabengröße mit dem jeweils gespeicherten Relevanzwert korreliert. Einem Buchstaben mit einem gespeicherten Relevanzwert von "null" könnte somit die vorgegebene minimale Buchstabengröße und einem Buchstaben mit dem Relevanzwert "eins" die vorgegebene maximale Buchstabengröße zugewiesen werden, während Buchstaben von Textbestandteilen mit mittlerer Relevanz ein Wert zwischen 0 und 1 zugewiesen werden kann, wodurch bei der Darstellung des Textobjekts eine mittlere Buchstabengröße ausgewählt wird.

Eine weitere bevorzugte Ausführungsform der Erfindung sieht vor, dass die Verfahrensschritte a) bis d) zur Laufzeit im unmittelbaren Vorlauf des Buchstaben-Rendering erfolgen. Auch bei dieser Ausführungsform wird Speicherplatz eingespart, da die Ergebnisse der Relevanzanalyse jeweils nur für die wenigen momentanen darzustellenden Textobjekte - anstatt für die gesamte Vielzahl der in einer Datenbank enthaltenen Textobjekte - gespeichert werden müssen. Dank dieser Ausführungsform ist es beispielsweise auch möglich, unmittelbar und dynamisch auf Änderungen sämtlicher der Anzeige zugrundeliegender Informationen zu reagieren. Da die Umformung der anzuzeigenden Textobjekte bei dieser Ausführungsform stets nur unmittelbar im Vorfeld der eigentlichen Ausgabe erfolgt, können somit jederzeit Änderungen beim Datenbestand wie beispielsweise Änderungen von Straßennamen, Points of Interest u.dgl. wie auch etwaige Änderungen der semantischen Zusatzinformationen berücksichtigt und bei der Umformung der Textobjekte jeweils einbezogen werden.

Eine alternative Ausführungsform des erfindungsgemäßen Verfahrens sieht vor, dass die Verfahrensschritte a) bis d) im Rahmen einer Vorverarbeitung einer das Textobjekt umfassenden Datenbank erfolgen.

Bei dieser Ausführungsform kann das erfindungsgemäße Verfahren auch bei Endgeräten mit nur vergleichsweise geringer zu Verfügung stehender Rechenleistung angewendet werden. Dies ergibt sich dadurch, dass bei dieser Ausführungsform die Relevanzanalyse nicht unmittelbar vor bzw. zur Laufzeit der Textdarstellung erfolgen muss, sondern bereits im Vorfeld mittels einer spezialisierten, leistungsfähigeren Einrichtung durchgeführt werden kann. In diesem Fall werden die Ergebnisse der Relevanzanalyse nicht nur für die aktuell darzustellenden Textbereiche bzw. Textobjekte, sondern bevorzugt für alle Textobjekte der Datenbank vorab erzeugt und gespeichert. Damit wird zwar mehr Speicherplatz benötigt, aber andererseits wird zur Laufzeit des Renderings der Anzeigedarstellung die Analyse der darzustellenden Textobjekte und damit Rechenzeit eingespart.

Eine weitere bevorzugte Ausführungsform des erfindungsgemäßen Verfahrens schließlich sieht vor, dass die Ursprungsgröße der Buchstaben des Textobjekts eine Variable ist. Dabei wird die Ursprungsgröße der Buchstaben des Textobjekts vorzugsweise in Abhängigkeit des zur Darstellung des Textobjekts zur Verfügung stehenden Platzes und/oder in Abhängigkeit der Grundbedeutung des Textobjekts festgelegt. Auf diese Weise kann eine weitere Optimicrung der Textdarstellung und Lesbarkeit erfolgen, indem auch teilkomprimierte Textobjekte jeweils unter Berücksichtigung des zur Verfügung stehenden Platzes mit der insgesamt maximalen Länge dargestellt werden. Gegebenenfalls kann auch eine insgesamt proportionale Verkleinerung von solchen Textobjekten erfolgen, die eine vergleichsweise geringe Grundbedeutung aufweisen, so dass für Textobjekte mit höherer Grundbedeutung mehr Platz auf der Anzeige verbleibt.

Im Folgenden wird die Erfindung anhand lediglich Ausführungsbeispiele darstellender Zeichnungen näher erläutert.

Es zeigen
- **Fig. 1**: ein Beispiel für die Bildschirmdarstellung eines Navigationsgeräts gemäß dem Stand der Technik mit einer Liste von Adressen bzw. potenziellen Fahrtzielen;
- **Fig. 2**: ein weiteres Beispiel für eine Bildschirmdarstellung eines Navigationsgeräts gemäß dem Stand der Technik mit einer Kartendarstellung sowie mit Texteinblendung;
- **Fig. 3**: in schematischer Darstellung ein Beispiel für einen Stra-ßennamen in der erfindungsgemäß teilkomprimierten Form sowie zum Vergleich unkomprimiert in der Ursprungsgröße;
- **Fig. 4**: in einer **Fig. 3** entsprechenden Darstellung ein weiteres Beispiel für einen Straßennamen in der teilkomprimierten Form sowie zum Vergleich in Ursprungsgröße;
- **Fig. 5**: in einer **Fig. 3** und 4 entsprechenden Darstellung ein Beispiel für einen Ortsnamen in der teilkomprimierten Form und zum Vergleich in Ursprungsgröße; und
- **Fig. 6**: in einer **Fig. 3** bis **5** entsprechenden Darstellung ein Beispiel für die Bezeichnung eines Points of Interest in der teilkomprimierten Form und zum Vergleich in Ursprungsgröße.

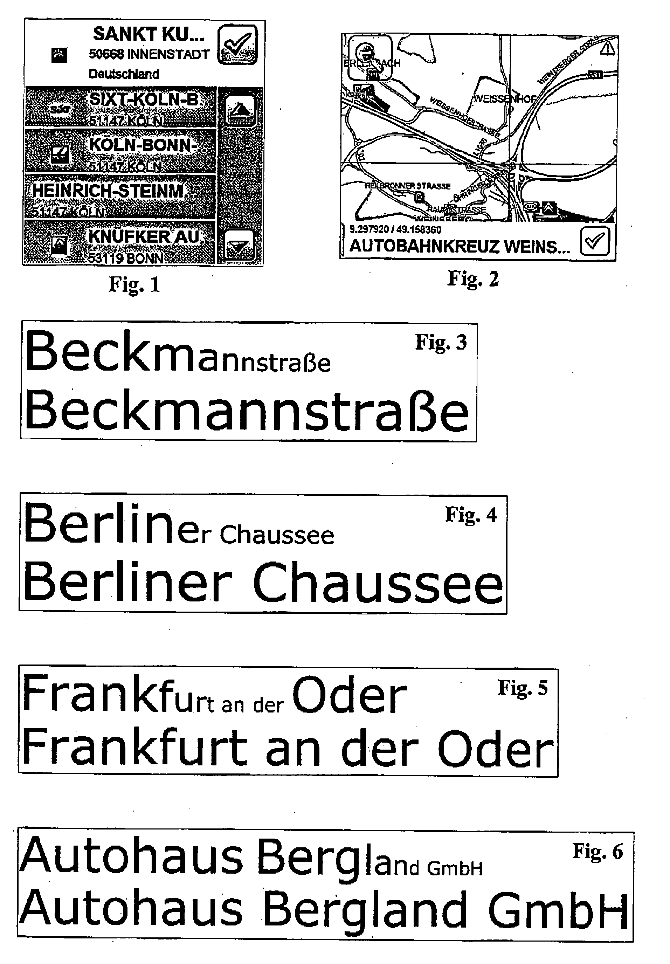

Die Fig. 1 und 2 zeigen jeweils Bildschirmdarstellungen von Navigationsgeräten gemäß dem Stand der Technik. Dabei ist in Fig. 1 eine Liste von Adressen bzw. potenziellen Fahrtzielen auf dem Bildschirm eines Navigationsgeräts dargestellt, während in Fig. 2 eine Kartendarstellung mit darunter angeordneter Texteinblendung eines gerade erreichten Routenpunktes abgebildet ist.

Man erkennt, dass die jeweils dargestellten Textbezeichnungen aus Platzgründen teilweise stark verkürzt werden müssen, um innerhalb des horizontal zur Verfügung stehenden Platzes untergebracht werden zu können. Hierunter leidet sowohl die Lesbarkeit als auch die rasche Erfassung des tatsächlichen Informationsgehalts einer Textbezeichnung. Unter Umständen kann es vorkommen, dass der Sinngehalt einer dergestalt verkürzt dargestellten Textbezeichnung überhaupt nicht mehr oder nur noch durch Raten ermittelt werden kann. Dass dies insbesondere bei mobilen Navigationsanwendungen, die Aufmerksamkeit während der Fahrt erfordern, nicht nur unerwünscht ist, sondern zu einem Sicherheitsproblem im Straßenverkehr werden kann, liegt auf der Hand.

Auch weisen die in Fig. 2 in der Kartendarstellung erkennbaren Textbezcichnungen diverser geographischer Merkmale teilweise eine erhebliche Länge auf, was zu Schwierigkeiten und Einschränkungen entweder bei der Lesbarkeit oder bei der Unterbringung der Textbezeichnungen - beispielsweise der Straßennamen - im Bereich des jeweils bezeichneten Kartenobjekts führen kann. Eigentlich wünschenswerte Tcxtbczeichnungen müssen somit entweder weggelassen oder stark verkürzt dargestellt werden, damit sie sich nicht mit anderen darzustellenden Objekten überschneiden.

In den Fig. 3 bis 6 hingegen sind einige Beispiele für erfindungsgemäß teilkomprimierte Textobjekte dargestellt, jeweils im Zusammenhang mit demselben zum Vergleich unkomprimiert in Ursprungsgröße dargestellten Textobjekt. Deutlich wird erkennbar, dass die erfindungsgemäße teilweise Kompression bzw. Verkürzung der Textobjekte Platz in erheblichem Maße einspart, ohne dass jedoch Teile des Textobjekts weggelassen oder abgeschnitten werden müssten.

Von den dargestellten Beispielen betreffen Fig. 3 und 4 jeweils einen Straßennamen, wobei Fig. 3 einen einteiligen Straßennamen zeigt, während es sich bei Fig. 4 um einen zweiteiligen Straßennamen handelt.

Bezüglich des Beispiels aus Fig. 3 mit dem Straßennamen "Beckmannstraße" erfolgt die erfindungsgemäße Analyse und Teilkompression des Straßennamens dabei wie folgt.

Zunächst wird anhand von zu diesem Textobjekt - z.B. in einer Datenbank oder in der zugehörigen digitalen Karte - gespeicherten Zusatzinformationen festgestellt, dass das Textobjekt vom Typ "Straßenname" ist (also eine Straße bezeichnet), in deutscher Sprache vorliegt und eine Straße in Deutschland betrifft. Diese Informationen sind für die nachfolgenden Schritte von Bedeutung, insbesondere zur Auswahl der für die Analyse heranzuziehenden sprachlichcn, semantischen und morphologischen Hintergrundinformationen.

Anschließend wird anhand der zu diesem Textobjekt gespeicherten Zusatzinformationen ermittelt, dass der Textbestandteil "Bcckmann" den Namen der Straße betrifft, während der Textbestandteil "-straße" den Straßentyp bzw. die Charakterisierung des Textobjekts als Straße betrifft. Ferner wird die Anbindung zwischen den Textbestandteilen "Beckmann" und "straße" als verbundene Anbindung ermittelt, da zwischen den beiden Textbestandteilen "Beckmann" und "straße" keines der erkannten Trennzeichen (Leerzeichen, Bindestrich oder Apostroph) vorgefunden wurde. Es wird zudem festgestellt, dass der Straßentyp "straße" in der Reihenfolge hier hinter dem Basisnamen "Beckmann" angeordnet ist.

Anhand der Charakterisierung des Textbestandteils "straße" lässt sich nun vollautomatisch feststellen, dass der Textbestandteil "straße" eine geringere semantischer Relevanz aufweist als der Textbestandteil "Bcckmann". Dies entspricht der Erfahrungstatsache, dass für den Nutzer - beispielsweise bei der Auswahl eines Fahrtziels oder bei der Ausschau nach einem Straßennamen - die Straßenbezeichnung eine massiv wichtigere Rolle spielt als der Straßentyp.

Nun erfolgt eine weitergehende Analyse des Textbestandteils "Beckmann", wozu entsprechende, im Gerät gespeicherte Listen insbesondere aus deutschen Artikeln, Präpositionen und morphologischen Bedeutungsinhalten herangezogen werden. Im vorliegenden Fall ergibt die Analyse auf Suffixe und Präfixe keine Treffer, ebenso wie die Analyse auf Vorliegen von Artikeln oder Präpositionen keine Treffer ergibt, da der Textbestandteil "Beckmann" keine solchen Elemente enthält. Eine weitergehende morphologische (bedeutungsbezogene) Analyse anhand gespeicherter morphologischer Regeln und zugehöriger Textelemente ergibt jedoch, dass die Endung "mann" des Textbestandteils "Beckmann" eine statistisch geringere semantische bzw. morphologische Relevanz aufweist als der Wortbestandteil "Beck".

Das Ergebnis der nun vollständigen Relevanzanalyse des darzustellenden Textobjekts "Beckmannstraßc" kann nun mittels Lauflängenkodierung platzsparend in der Form "5_10#0" zwischengespeichert werden. Dies bedeutet, dass ab der Zeichenposition 5 (Buchstabe "m") zehn nachfolgende Buchstaben die Relevanz "null" aufweisen.

Zum Zweck der Darstellung des analysierten Textobjekts "Beckmannstraße" wird nun die zuvor ermittelte Information herangezogen, dass zwischen dem Textbereich "Beck" mit semantisch hoher Relevanz und dem Textbereich "mannstraße" mit semantisch niedriger Relevanz kein Trennzeichen vorhanden ist. Um somit keine den Lesefluss störende visuelle Bruchstelle zwischen dem Textbereich mit semantisch hoher Relevanz und dem Textbereich mit semantisch niedriger Relevanz zu erzeugen, erfolgt eine sukzessive Anpassung des Kompressionsgrades im Bereich der Sprungstelle zwischen dem Textbereich mit semantisch hoher Relevanz und dem Textbereich mit semantisch niedriger Relevanz.

Dies führt im Ergebnis dazu, dass der für den Nutzer zur Erkennung des Straßennamens semantisch besonders wichtige Textbereich "Beck" mit der als maximal konfigurierten Buchstabengröße angezeigt wird, woraufhin eine sukzessive Verkleinerung im Bereich des Übergangs zu dem semantisch weniger wichtigen Textbereich "mannstraße" erfolgt.

Im Anschluss an den Übergangsbereich wird der Rest des Textbereichs mit semantisch niedriger Relevanz mit einer bestimmten minimalen Buchstabengröße angezeigt, die entweder festgelegt wird oder aber in Abhängigkeit des zur Verfügung stehenden Platzes dynamisch berechnet werden kann. Bezüglich der Einzelheiten eines Verfahrens zur Ermittlung der maximalen bzw. minimalen Buchstabengrößen wird auf die in Bezug genommene Patentanmeldung DE 10 2006 052 663.5 verwiesen.

Die Vorgabe einer minimalen bzw. maximalen Buchstabengröße kann sich ferner auch an den zum Textobjekt gehörigen, gespeicherten Zusatzinformationen orientieren. So können Objekte von höherer Bedeutung (z.B. Großstädte) größere sowohl maximale als auch minimale Buchstabengrößen aufweisen. Ferner ist es möglich, die Buchstabengrößen nicht in Form absoluter Zahlen vorzugeben, sondern prozentual zu interpretieren. Auf diese Weise kann beispielsweise festgelegt werden, dass Buchstaben von Textbereichen mit minimaler Relevanz in 60% der Größe der Buchstaben der Textbereiche mit maximaler bzw. normaler Relevanz dargestellt werden.

In ähnlicher Weise kann die Analyse und Teilkompression des zweiteiligen Straßennamens "Berliner Chaussee" gemäß Fig. 4 erfolgen.

Auch hier wird zunächst wieder anhand von zu diesem Textobjekt gespeicherten Zusatzinformationen festgestellt, dass das zu behandelnde Textobjekt "Berliner Chaussee" vom Typ "Straßenname" ist, in deutscher Sprache vorliegt und eine Straße im geographischen Gebiet von Deutschland betrifft.

Anhand der zu diesem Textobjekt gespeicherten Zusatzinformationen ist ferner bekannt, dass der Textbestandteil "Berliner" den Namen der Straße betrifft, während der Textbestandteil "Chaussee" den Straßentyp beschreibt. Die Anbindung zwischen den Textbestandteilen "Berliner" und "Chaussee" wird als getrennt ermittelt, da zwischen den beiden Textbestandteilen "Berliner" und "Chaussee" ein Leerzeichen und damit eines der festgelegten Trennzeichen (Bindestrich, Leerzeichen, Apostroph) vorgefunden wurde. Ferner wird festgestellt, dass der Straßentyp "Chaussee" in der Reihenfolge hier hinter dem Basisnamen "Berliner" angeordnet ist.

Anhand der ermittelten Charakterisierung des Textbestandteils "Chaussee" als Straßentyp kann dem Textbestandteil "Chaussee" automatisch wieder eine gegenüber dem Textbestandteil "Berliner" reduzierte semantischer Relevanz zugeordnet werden.

Nun erfolgt eine Analyse des Textbestandteils "Berliner", wozu entsprechende, im Gerät gespeicherte Listen insbesondere von deutschen Artikeln, Präpositionen und morphologischen Bedeutungsinhalten herangezogen werden. Hier ergibt die Analyse auf Suffixe und Präfixe wieder keine Treffer, ebenso wie die Analyse auf Artikel oder Präpositionen keine Treffer ergibt, da der Basis-Textbestandteil "Berliner" keine solche Bestandteile enthält. Die weitergehende morphologische Analyse ergibt jedoch, dass die Endsilbe "-er" des Textbestandteils "Berliner" statistisch eine geringere semantische bzw. morphologische Relevanz aufweist als der vordere Wortbestandteil "Berlin".

Das Ergebnis der nun vollständigen Relevanzanalyse des darzustellenden Textobjekts "Berliner Chaussee" kann wieder platzsparend mittels Lauflängenkodierung zwischengespeichert werden, was hier in der Form "7_2#0/0_8#0" erfolgt. Dies bedeutet mit anderen Worten, dass ab der Zeichenposition 7 (Buchstabe "e") zwei nachfolgende Buchstaben die Relevanz "null" aufweisen, worauf eine Trennstelle folgt. Anschließend folgen ab der Zeichenposition 10 (Buchstabe "C") noch acht weitere Buchstaben mit der Relevanz "null".

Für die Darstellung des analysierten Textobjekts "Berliner Chaussee" wird noch ermittelt, dass zwischen dem ersten Textbereich "Berlin" mit semantisch hoher Relevanz und dem nachfolgenden Textbereich "er" mit semantisch niedriger Relevanz kein Trennzeichen vorhanden ist, weshalb zwischen diesen beiden Textbereichen wieder eine sukzessive Größenanpassung erfolgt.

Bezüglich des weiteren Textbereichs "Chaussee", der ebenfalls eine semantisch niedrige Relevanz aufweist, wird festgestellt, dass mit dem Leerzeichen vor diesem Textbereich ein Trennzeichen vorliegt, während nach diesem Textbereich das Textende erreicht ist. Aus diesem Grund ist bezüglich dieses Textbereichs keine sukzessive Größcnanpassung erforderlich.

Dies führt gemäß der Darstellung in Fig. 4 im Ergebnis dazu, dass der für den Nutzer semantisch besonders wichtige Textbereich "Berlin" mit der maximalen Buchstabengröße angezeigt wird, woraufhin eine sukzessive Verkleinerung im Bereich des Übergangs zu dem semantisch weniger wichtigen Textbereich "er" erfolgt. Der weitere Textbereich "Chaussee" mit semantisch vergleichsweise niedriger Relevanz wird aufgrund der vorstehenden Analyse insgesamt mit der minimal konfigurierten bzw. ermittelten Buchstabengröße dargestellt.

Ähnlich erfolgen Analyse und Teilkompression des Orts- bzw. Gemeindenamens "Frankfurt an der Oder" gemäß Fig. 5.

Gemäß der zu diesem Textobjekt gespeicherten Zusatzinformationen handelt es sich bei dem zu bearbeitenden Textobjekt "Frankfurt an der Oder" um einen Gemeindenamen in deutscher Sprache, und es ist eine Gemeinde im geographischen Gebiet von Deutschland betroffen.

Anhand dieser Informationen wird festgestellt, dass eine deutsche Artikel-, Präpositionen- und Suffix/Präfix-Liste für die weitere Analyse erforderlich ist, welche im Rahmen der im Gerät gespeicherten Hintergrundinformationen zur deutschen Sprache vorliegt. Diese weitere Analyse wird für die einzelnen Bestandteile des Textobjekts jeweils unabhängig voneinander ausgeführt. Dabei können sowohl die zu analysierenden Textbestandteile als auch die Vergleichsbegriffe aus den gespeicherten Wortlisten jeweils zuvor in Großbuchstaben umgewandelt werden, um bei der Analyse eine Unabhängigkeit von Groß und Kleinschreibung zu erreichen.

Hier ergibt zunächst einmal die Analyse auf Suffixe und Präfixe keine Treffer. Die Analyse auf Artikel ergibt als Treffer ab Buchstabenposition 14 im zu analysierenden Namen den Textbestandteil "DER" als Artikel, wobei der Textbestandteil "DER" jeweils durch Leerzeichen als Trennzeichen vom Rest des Namens getrennt ist. Auch die Präpositionsanalyse ergibt einen Treffer, und zwar den Textbestandteil "AN", ebenfalls durch Leerzeichen als Trennzeichen vom Rest des Namens getrennt, an der Buchstabenposition 11 im Namen. Die weitergehende morphologische Analyse ergibt zudem, dass die Endsilbe "furt" des Textbestandteils "Frankfurt" eine geringere semantische bzw. morphologische Bedeutung aufweist als der vordere Wortbestandteil "Frank".

Das Ergebnis der nun abgeschlossenen Relevanzanalyse des darzustellenden Textobjekts "Frankfurt an der Oder" wird wieder platzsparend mittels der Lauflängenkodierung zwischengespeichert, was bei diesem Beispiel in der Form "6_4#0|11_2#0|14_3#0" erfolgt. Dies bedeutet mit anderen Worten, dass ab der Zeichenposition 6 (Buchstabe "f") vier nachfolgende Buchstaben die Relevanz "null" aufweisen, worauf eine Trennstelle folgt. Anschließend folgen ab der Zeichenposition 11 (Buchstabe "a") zwei weitere Buchstaben mit der Relevanz "null", wieder eine Trennstelle und ab Zeichenposition 14 (Buchstabe "d") drei weitere Buchstaben mit der Relevanz "null". Die höhere bzw. normal hohe Relevanz der Textbestandteile "Frank" und "Oder" wird nicht eigens codiert und gespeichert, da bei dieser Ausführungsform per Definition feststeht, dass Wortbestandteilen ohne eigens gespeicherte Relevanznotation hohe Relevanz zukommt. Auf diese Weise lässt sich Speicherplatz einsparen.

Für die Darstellung des analysierten Textobjekts "Frankfurt an der Oder" wird schließlich festgestellt, dass zwischen dem ersten Textbereich "Frank" mit semantisch hoher Relevanz und dem nachfolgenden Textbereich "furt" mit semantisch niedriger Relevanz kein Trennzeichen vorliegt, weshalb zwischen diesen beiden Textbereichen wieder eine sukzessive Größenanpassung erfolgt. Vor und nach dem zweiten und dritten Textbereich mit niedriger Relevanz ("an" und "der") liegt hingegen jeweils ein Leerzeichen als Trennzeichen vor, weshalb bezüglich der Übergänge zwischen diesen Textbereichen keine Größcnanpassung erforderlich ist. Im Ergebnis wird somit am Übergang zwischen "Frank" und "furt" eine Größenanpassung durchgeführt.

Dies führt gemäß der Darstellung in Fig. 5 im Ergebnis dazu, dass die für den Nutzer semantisch bedeutungsvollen Textbereiche "Frank" und "Oder" auf dem Bildschirm mit der maximalen Buchstabengröße ausgegeben werden, während eine sukzessive Verkleinerung im Bereich des Übergangs zu dem semantisch weniger wichtigen Textbereich "furt" erfolgt. Die weiteren beiden Textbereiche "an" und "der" mit semantisch niedriger Relevanz werden auf Basis der vorstehenden Analyse komplett mit der als minimal konfigurierten Buchstabengröße dargestellt.

Die Analyse und teilkomprimierte Darstellung der Bezeichnung eines Beispiels für einen Point of Interest namens "Autohaus Bergland GmbH", vgl. Fig. 6, erfolgt wie nachfolgend dargestellt.

Gemäß den bei der betrachteten Ausführungsform zusätzlich zum betrachteten Textobjekt "Autohaus Bergland GmbH" gespeicherten Informationen handelt es sich bei dem Textobjekt um die Bezeichnung eines Points of Intercst in deutscher Sprache, ferner liegt der Point of Interest geographisch betrachtet in Deutschland.

Anhand dieser Zusatzinformationen wird automatisch festgestellt, dass eine deutsche Artikel-, Präpositionen- und Gesellschaftsformen-Abkürzungsliste für die weitere Analyse erforderlich ist. Diese liegt im Rahmen der im Gerät gespeicherten Hintergrundinformationen zur deutschen Sprache vor. Die weitere Analyse wird nun für die einzelnen Bestandteile des betrachteten Textobjekts jeweils unabhängig voneinander ausgeführt. Dabei können sowohl die zu analysierenden Textbestandteile als auch die Vergleichsbegriffe aus den vorstehend genannten, gespeicherten Wortlisten jeweils zuvor wieder in Großbuchstaben umgewandelt werden. Hierdurch lässt sich bei der Analyse eine Unabhängigkeit von Groß und Kleinschreibung erreichen.

Vorliegend ergibt zunächst einmal die Analyse auf Suffixe und Präfixe sowie auf Artikel keine Treffer. Die Analyse auf Gesellschaftsformen ergibt als Treffer ab Buchstabenposition 19 im zu analysierenden Textobjekt den Textbestandteil "GmbH", wobei der Textbestandteil "GmbH" durch Leerzeichen als Trennzeichen jeweils vom Rest des Tcxtobjekts getrennt ist. Die anschließende morphologische Analyse schließlich ergibt, dass die Endsilbe "land" des Textbestandteils "Bergland" eine geringere semantische bzw. morphologische Relevanz aufweist als der vordere Wortbestandteil "Berg".

Das Ergebnis der damit abgeschlossenen Relevanzanalyse des darzustellenden Textobjekts "Autohaus Bergland GmbH" wird wieder platzsparend mittels Lauflängenkodierung zwischengespeichert, was bei diesem Beispiel in der Form "14_4#0|19_4#0" erfolgt. Dies bedeutet mit anderen Worten, dass ab der Zeichenposition 14 (Buchstabe "1") vier nachfolgende Buchstaben die Relevanz "null" aufweisen, worauf eine Trennstelle folgt. Anschließend folgen ab der Zeichenposition 19 (Buchstabe "G") vier weitere Buchstaben mit der Relevanz "null". Die höhere bzw. normal hohe Relevanz der Textbestandteile "Autohaus" und "Berg" wird wieder nicht eigens codiert und gespeichert, um auf diese Weise Speicherplatz zu sparen.

Zum Zweck der Darstellung des analysierten Textobjekts "Autohaus Bergland GmbH" auf dem Bildschirm wird noch ausgewertet, dass vor dem ersten Textbereich "land" - der als wenig relevant ermittelt wurde - und dem voranstehenden Textbereich "Berg" mit semantisch hoher Relevanz kein Trennzeichen vorliegt, weshalb am Übergang zwischen diesen beiden Textbereichen wieder eine sukzessive Größenanpassung vorgenommen wird, um keine visuell störende Sprungstelle zu erzeugen. Vor dem zweiten Textbereich mit niedriger Relevanz ("GmbH") liegt hingegen ein Leerzeichen als Trennzeichen vor, und dieser zweite Textbereich mit niedriger Relevanz geht bis zum Textende. Daher sind bezüglich der Ränder dieses Textbereichs keine Größenanpassungen erforderlich, und der Textbereich "GmbH" wird somit ohne sukzessive Größenanpassung komplett in der als minimal konfigurierten Buchstabengröße angezeigt.

Dies führt gemäß der Darstellung in Fig. 6 im Ergebnis dazu, dass die für den Nutzer semantisch bedeutenden Textbereiche "Autohaus" und "Berg" auf dem Bildschirm mit der maximalen Buchstabengröße ausgegeben werden, während eine sukzessive Verkleinerung im Bereich des Übergangs zu dem semantisch weniger wichtigen Textbereich "-land" erfolgt. Der weitere Textbereich "GmbH" mit semantisch niedriger Relevanz wird auf Basis der vorstehenden Analyse komplett mit der als minimal konfigurierten Buchstabengröße dargestellt.

Als weiteres Beispiel kann auch der Fall auftreten, dass ein darzustellendes Textobjekt eine durchgängig konstante semantische Relevanz aufweist. Ein Beispiel dafür ist der polnische Ortsname "Stubice".

Anhand der zu diesem Textobjekt gespeicherten Zusatzinformationen wird festgestellt, dass zur weiteren Analyse eine polnische Artikel-, Präpositionen- und Suffix-/Präfixliste erforderlich ist. Diese liegt im Rahmen der im Gerät gespeicherten Hintergrundinformationen zur polnischen Sprache vor.

Bei diesem Beispiel ergibt die Suffix/Präfixanalyse keine Treffer, ebenso die Artikel-Analyse und die Präpositionsanalyse. Auch die weitergehende morphologische Analyse ergibt keine Anzeichen für Bestandteile des Ortsnamens "Stubice" mit besonders hoher bzw. besonders niedriger semantischer Relevanz.

Das Ergebnis der damit abgeschlossenen Relevanzanalyse des darzustellenden Textobjekts "Stubice" wird in diesem Fall gespeichert als <leer>, bzw. es erfolgt keine Speicherung eines Relevanzwerts zu diesem Textobjckt. Dies bedeutet mit anderen Worten, dass das gesamte Textobjekt als relevant erachtet und bei der Bildschirmausgabe für alle Buchstaben die als maximal konfigurierte Buchstabengröße verwendet wird.

Im Ergebnis wird somit deutlich, dass mit der Erfindung eine Vorrichtung und ein Verfahren zur Erzeugung einer textuellen Darstellung geschaffen werden, mit der bzw. mit dem sich die im Stand der Technik anzutreffenden Nachteile bei der Textdarstellung insbesondere auf Bildschirmen mit geringen Abmessungen entscheidend verbessern lassen. Gerade im Bereich der Navigationsgeräte ermöglicht es die Erfindung, auch größere Textobjekte, wie beispielsweise lange Straßenbezeichnungen, auf kleinen Navigationsbildschirmen zur Anzeige zu bringen, ohne dass dabei anderweitig benötigter, wertvoller Platz auf dem Bildschirm verloren geht bzw. ohne dass diese Textobjekte verkürzt oder abgeschnitten dargestellt werden müssten, worunter die Lesbarkeit und die rasche Erfassung des Sinngehalts leiden könnten.

Die Erfindung liefert damit einen entscheidenden Beitrag zur Verbesserung der Darstellbarkeit von Textobjekten insbesondere auf kleinen Bildschirmen bei mobilen Geräten. Gerade bei Navigationsgeräten wird die schnelle und intuitive Erfassung der Bedeutung des Bildschirminhalts maßgeblich verbessert, was nicht zuletzt auch der Sicherheit des Nutzers und der besseren Konzentration des Nutzers auf den Straßenverkehr zugutc kommt.

## Patentansprüche

1. Grafische Ausgabevorrichtung zur Erzeugung einer gemischt grafisch-textuellen Darstellung mit zumindest einem aus einer Mehrzahl von Buchstaben bestehenden Textobjekt für die Kennzeichnung eines geographischen Merkmals, die Ausgabevorrichtung umfassend eine Prozessorcinrichtung, die zur Umformung des Textobjekts eingerichtet ist, dergestalt, dass das umgeformte Textobjekt neben einem normalen Textbereich mit Buchstaben in Ursprungsgröße einen komprimierten Textbereich mit relativ zur Ursprungsgröße verkleinerten bzw. komprimierten Buchstaben umfasst,
**dadurch gekennzeichnet,**
**dass** die Grenze zwischen dem normalen Textbereich und dem komprimierten Textbereich an einer semantischen Sprungstelle des Textobjekts verläuft.

2. Ausgabevorrichtung nach Anspruch 1,
**dadurch gekennzeichnet,**
**dass** die Ausgabevorrichtung innerhalb eines Textobjekts zur Darstellung von Buchstaben mit mehr als zwei unterschiedlichen Größenabmessungen eingerichtet ist.

3. Ausgabevorrichtung nach Anspruch 1 oder 2,
**dadurch gekennzeichnet,**
**dass** die Größenabmessungen von Buchstaben innerhalb eines definierten Umfelds der Sprungstelle stetig und/oder kontinuierlich zwischen der Größenabmessung der Buchstaben des normalen Textbereichs und der Größenabmessung der Buchstaben des komprimierten Textbereichs verändert sind.

4. Ausgabevorrichtung nach einem der Ansprüche 1 bis 3,
**dadurch gekennzeichnet,**
**dass** die Ausgabevorrichtung eine Speichereinrichtung mit einer Zusammenstellung von semantischen, morphologischen und/oder linguistischen Sprachregeln enthält.

5. Ausgabevorrichtung nach einem der Ansprüche 1 bis 4,
**dadurch gekennzeichnet,**
**dass** die Ausgabevorrichtung Listen von Textbestandteilen mit feststehender, insbesondere niedriger, semantischer Relevanz enthält.

6. Ausgabevorrichtung nach einem der Ansprüche 1 bis 5,
**dadurch gekennzeichnet,**
**dass** für jeden normalen Textbereich sowie für jeden zu komprimierenden Textbereich des Textobjekts eine Relevanznotation gespeichert ist.

7. Ausgabevorrichtung nach Anspruch 1 bis 5,
**dadurch gekennzeichnet,**
**dass** lediglich für zu komprimierende Textbereiche des Textobjekts eine Relevanznotation gespeichert ist.

8. Ausgabevorrichtung nach einem der Ansprüche 1 bis 7,
**dadurch gekennzeichnet,**
**dass** die Größenabmessungen der Buchstaben des komprimierten Textbereichs lediglich in einer Dimension verändert sind.

9. Ausgabevorrichtung nach einem der Ansprüche 1 bis 8,
**dadurch gekennzeichnet,**
**dass** die Vorrichtung zur automatischen Ermittlung der maximalen Ursprungsgröße der Buchstaben des normalen Textbereichs in Abhängigkeit des für das Textobjekt zur Verfügung stehenden Platzes eingerichtet ist.

10. Ausgabevorrichtung nach einem der Ansprüche 1 bis 9,
**dadurch gekennzeichnet,**
**dass** die Ausgabevorrichtung ein transportables Navigationsgerät, ein Terminal für einen Online-Navigationsdienst, eine Desktop- bzw. mobile Flottensoftware oder eine Desktop-Publishing-Einrichtung ist.

11. Verfahren zur Erstellung eines aus einer Mehrzahl von Buchstaben bestehenden Textobjekts mittels einer Prozessoreinrichtung, zum Zweck der Darstellung des Textobjekts mittels einer grafischen Ausgabevorrichtung, wobei das Textobjekt einen normalen Textbereich mit Buchstaben in Ursprungsgröße sowie einen zu komprimierenden Textbereich mit relativ zur Ursprungsgröße verkleinerten bzw. komprimierten Buchstaben umfasst,
das Verfahren aufweisend die nachfolgenden Verfahrensschritte:
a) Analyse des darzustellenden Textobjekts anhand gespeicherter semantischer, morphologischer bzw. linguistischer Regeln und/oder gespeicherter Zusatzinformationen;
b) morphologische Aufteilung des darzustellenden Textobjckts in Textbereiche bzw. Morpheme;
c) Ermittlung der semantischen Relevanz der Textbereiche bzw. Morpheme;
d) Speicherung des Relevanzanalyseergebnisses für jeden Textbereich mit reduzierter semantischer Relevanz;
e) Rendern der Buchstaben von Textbereichen mit normaler semantischer Relevanz in Ursprungsgröße und der Buchstaben von Textbereichen mit reduzierter semantischer Relevanz mit verkleinerten Größenabmessungen auf Basis der Relevanzanalyseergebnisse;
f) Ausgabe des gerenderten Textobjekts auf der grafischen Ausgabeeinrichtung.

12. Verfahren nach Anspruch 11,
**dadurch gekennzeichnet,**
**dass** die Zusatzinformationen im Verfahrenschritt a) aktuelles Land, Sprache, Objekttyp, Ortstyp bzw. Ortsgröße, Straßentyp und -bedeutung und/oder Textposition des Objekttyps im Objektnamen umfassen.

13. Verfahren nach Anspruch 11 oder 12,
**dadurch gekennzeichnet,**
**dass** die Zusatzinformationen im Verfahrenschritt a) Listen aus Textbestandteilen mit reduzierter semantischer Relevanz, wie Präfixe, Infixe, Suffixe, Vorsilben und Endsilben, sprachspezifische Artikel und Präpositionen, Abkürzungen und Gesellschaftsformen, Listen aus Trennzeichen, und/oder Regeln zur Kompositabildung und Silbentrennung umfassen.

14. Verfahren nach einem der Ansprüche 11 bis 13,
**dadurch gekennzeichnet,**
**dass** im Verfahrenschritt e) Buchstaben innerhalb eines definierten Umfelds der Sprungstelle zwischen normalem und komprimiertem Textbereich stetig und/oder kontinuierlich zwischen der Größenabmessung der Buchstaben des normalen Textbereichs und der Größenabmessung der Buchstaben des komprimierten Textbereichs gerendert werden.

15. Verfahren nach einem der Ansprüche 11 bis 14,
**dadurch gekennzeichnet,**
**dass** beim Vorliegen eines Trennzeichens an der Sprungstelle im Verfahrenschritt e) eine nicht stetige, sprunghafte Änderung der Buchstabengröße erfolgt.

16. Verfahren nach einem der Ansprüche 11 bis 15,
**dadurch gekennzeichnet,**
**dass** Ermittlung und Speicherung der Relevanzanalyseergebnisse in den Verfahrensschritten c) und d) in Form der Zuordnung eines mehr als zweistufigen Relevanzwerts zum jeweiligen Textbereich erfolgen.

17. Verfahren nach einem der Ansprüche 11 bis 16,
**dadurch gekennzeichnet,**
**dass** die Speicherung der Relevanzanalyseergebnisse im Verfahrenschritt d) unter Datenkompression mittels einer Lauflängcnkodierung erfolgt.

18. Verfahren nach einem der Ansprüche 11 bis 17,
**dadurch gekennzeichnet,**
**dass** die Verfahrensschritte a) bis d) zur Laufzeit im unmittelbaren Vorlauf des Buchstaben-Rendering erfolgen.

19. Verfahren nach einem der Ansprüche 11 bis 17,
**dadurch gekennzeichnet,**
**dass** die Verfahrensschritte a) bis d) im Rahmen einer Vorverarbeitung einer das Textobjekt umfassenden Datenbank erfolgen.

20. Verfahren nach einem der Ansprüche 11 bis 19,
**dadurch gekennzeichnet,**
**dass** die Ursprungsgröße eine Variable ist, wobei die Ursprungsgröße in Abhängigkeit des zur Darstellung des Textobjekts zur Verfügung stehenden Platzes und/oder in Abhängigkeit der Objektbedeutung des Textobjekts festgelegt wird.
